# EUROPÄISCHE PATENTSCHRIFT

(11) **EP 3 058 239 B1**
(45) Veröffentlichungstag und Bekanntmachung des Hinweises auf die Patenterteilung: **01.05.2019**
(21) Anmeldenummer: 14789207.9
(22) Anmeldetag: 13.10.2014
(51) Int. Cl.: F16C 7/06, F02B 75/04

(54) **LÄNGENVERSTELLBARE PLEUELSTANGE**
LENGTH-ADJUSTABLE CONNECTING ROD
BIELLE RÉGLABLE EN LONGUEUR

(30) Priorität: 18.10.2013 AT 506742013
(43) Veröffentlichungstag der Anmeldung: 24.08.2016
(73) Patentinhaber: AVL List GmbH, 8020 Graz (AT)
(72) Erfinder: MELDE-TUCZAI, Helmut, 8042 Graz (AT); LICHTENEGGER, Stefan, 8511 St. Stefan (AT); HOEDL, Bernhard, 8051 Graz (AT)
(74) Vertreter: Wallinger, Michael
(86) Internationale Anmeldenummer: PCT/EP2014/071890
(87) Internationale Veröffentlichungsnummer: WO 2015/055582

(56) Entgegenhaltungen:
- DE-A1- 4 226 361
- DE-U1- 8 429 462
- GB-A- 2 161 580
- JP-A- 2010 112 286
- US-A- 2 989 954
- US-A- 4 124 002

## Beschreibung

Die Erfindung betrifft eine längenverstellbare Pleuelstange für eine Hubkolbenmaschine, insbesondere für eine Brennkraftmaschine, mit zumindest einem ersten Stangenteil mit einem kleinen Pleuelauge und einem zweiten Stangenteil mit einem großen Pleuelauge, welche beiden Stangenteile teleskopartig zu- und/oder ineinander verschiebbar sind, wobei der zweite Stangenteil einen Führungszylinder und der erste Stangenteil ein im Führungszylinder längsverschiebbares Kolbenelement ausbilden, wobei auf der dem großen Pleuelauge zugewandten Seite des Kolbenelementes zwischen dem zweiten Stangenteil und dem Kolbenelement ein erster Hochdruckraum aufgespannt ist, in den zumindest ein erster Ölkanal einmündet, in welchem insbesondere ein in Richtung des ersten Hochdruckraumes öffnendes erstes Rückschlagventil angeordnet ist, wobei vom ersten Hochdruckraum zumindest ein erster Rücklaufkanal ausgeht, dessen Abflussquerschnitt durch ein Steuerventil in einer ersten Stellung verschließbar und in einer zweiten Stellung freigebbar ist, wobei vorzugsweise das Steuerventil einen in einer Aufnahmebohrung des zweiten Stangenteils der Pleuelstange axial verschiebbaren Stellkolben aufweist, welcher insbesondere durch eine Rückstellfeder in die erste Stellung und durch eine Betätigungskraft entgegen der Kraft der Rückstellfeder in die zweite Stellung verschiebbar ist.

Durch Ändern der Verdichtung einer Brennkraftmaschine kann Volllast mit geringerem Verdichtungsverhältnis, und Teillast und Starten mit erhöhtem Verhältnis gefahren werden. Dabei wird im Teillastbereich der Verbrauch verbessert, beim Start der Kompressionsdruck mit dem erhöhtem Verdichtungsverhältnis gesteigert und bei hoher Leistung der Spitzendruck mit verringertem Verhältnis reduziert, sowie Klopfen verhindert.

Es ist bekannt, zur Verstellung des Verdichtungsverhältnisses einen exzentrischen Kolbenbolzen oder einen exzentrischen Hubzapfen der Kurbelwelle einzusetzen. Weiters ist es bekannt, zur Veränderung des Verdichtungsverhältnisses den ganzen Zylinderblock zu heben oder die gesamte Kurbelwellenlagerung mit einer exzentrischen Lagerung derselben im Kurbelgehäuse zu senken.

Die Druckschrift US 2,217,721 A offenbart eine Brennkraftmaschine mit einer längenverstellbaren Pleuelstange mit einem ersten und einem zweiten Stangenteil, welche Stangenteile teleskopartig zu - und ineinander verschiebbar sind. Zwischen den beiden Stangenteilen ist ein Hochdruckraum aufgespannt, in den ein Ölkanal einmündet. Zur Rückbefüllung und Entleerung des Hochdruckraumes mit Öl und somit zur Längenverstellung der Pleuelstange ist ein Steuerventil mit einem axial verschiebbaren Verschlussteilelement vorgesehen, welches durch eine Rückstellfeder in eine erste geschlossene Stellung und durch Öldruck entgegen der Kraft der Rückstellfeder in eine zweite offene Stellung verschiebbar ist.

Weitere Pleuelstangen mit jeweils einem hydraulischen teleskopartigen Mechanismus zur Verstellung der Pleuellänge sind aus den Druckschriften FR 2 857 408 A1, WO 02/10568 A1, DE 198 35 146 A1, US 4 195 601 A, US 4 124 002 A und US 2 134 995 A bekannt.

Die WO 2013/092364 A1 beschreibt eine längenverstellbare Pleuelstange für eine Brennkraftmaschine mit einem ersten und einem zweiten Stangenteil. Die beiden Stangenteile sind teleskopartig zu- und/oder ineinander verschiebbar, wobei der zweite Stangenteil einen Führungszylinder und der erste Stangenteil ein im Führungszylinder längsverschiebbares Kolbenelement ausbildet. Zwischen dem ersten und dem zweiten Stangenteil ist ein erster Hochdruckraum aufgespannt, in den zumindest ein erster Ölkanal einmündet. Über einen in einer Aufnahmebohrung axial verschiebbaren Stellkolben kann der Zufluss zum Ölkanal gesteuert werden. Der Stellkolben wird durch eine Rückstellfeder in eine erste Stellung und durch Öldruck entgegen der Kraft der Rückstellfeder in eine zweite Stellung verschoben.

Die AT 512 334 A1 offenbart eine ähnliche längenverstellbare Pleuelstange mit teleskopartig verschiebbaren Stangenteilen, wobei die Stangenteile in zumindest einer Verschiebestellung mechanisch durch eine Arretiereinrichtung arretierbar sind. Die Arretiereinrichtung weist dabei einen Schieber auf, der in einer Aufnahmebohrung eines Stangenteiles quer zur Längsachse der Pleuelstange zwischen einer Verriegelungsposition und einer Freigabeposition verschiebbar ist. Der Schieber weist dabei einen keilförmigen Bereich auf, der mit einem korrespondierenden keilförmigen Bereich des anderen Stangenteils zusammenwirkt. Die Auslenkung des Schiebers erfolgt hydraulisch durch Druckbeaufschlagung einer Stirnseite des Schiebers entgegen der Kraft einer Rückstellfeder.

Nachteilig ist, dass die Arretiereinrichtung relativ viel Bauraum beansprucht. Weiters ist es von Nachteil, dass relativ viele aufwändig zu bearbeitende Bauteile eingesetzt werden. Die Ermittlung des für den jeweiligen Anwendungsfall optimalen Keilwinkels erfordert zusätzliche Entwicklungsarbeit.

All die bekannten Vorschläge setzen somit einen hohen konstruktiven und/oder steuerungstechnischen Aufwand voraus.

Aufgabe der Erfindung ist es, diese Nachteile zu vermeiden und einfache Lösung für die Änderung des Verdichtungsverhältnisses bereitzustellen.

Erfindungsgemäß wird dies dadurch erreicht, dass das Kolbenelement als zweiseitig wirkender Kolben, vorzugsweise als Stufenkolben, ausgebildet ist.

Ein zweiseitig wirkender Kolben ist in der vorliegenden Verwendung ein Kolben, der auf einander gegenüberliegenden Seiten mit Öl beaufschlagbar bzw. hydraulisch betätigbar ist und derart in zwei Richtungen Kraft ausüben kann.

Ein Stufenkolben ist ein Kolben mit unterschiedlich großen Wirkflächen, wobei beispielsweise eine der Wirkflächen als Ringfläche und die andere Wirkfläche als Kreisfläche ausgebildet ist.

Sowohl in einer der ersten Stellung des Steuerventils zugeordneten ausgezogenen, als auch in einer der zweiten Stellung des Steuerventils zugeordneten eingeschobenen Lage kann der erste Stangenteil relativ zum zweiten Stangenteil hydraulisch arretiert werden.

Vorzugsweise ist vorgesehen, dass auf der dem kleinen Pleuelauge zugewandten Seite des Kolbenelementes zwischen einem mit dem zweiten Stangenteil fest verbundenen Halteteil und dem Kolbenelement ein zweiter Hochdruckraum aufgespannt ist, in den zumindest ein zweiter Ölkanal einmündet, in welchem vorzugsweise ein in Richtung des ersten Hochdruckraumes öffnendes zweites Rückschlagventil angeordnet ist. Um eine Druckentlastung zu ermöglichen, kann vom zweiten Hochdruckraum zumindest ein zweiter Rücklaufkanal ausgehen, dessen Abflussquerschnitt durch das Steuerventil in der zweiten Stellung verschließbar und in der ersten Stellung freigebbar ist. Die ersten und zweiten Hochdruckräume halten den Kolben in Richtung des großen bzw. in Richtung des kleinen Pleuelauges fest.

Besonders vorteilhaft ist es, wenn in einer vorzugsweise vom großen Pleuelauge ausgehenden Zuführleitung zum Steuerventil eine in Richtung des Steuerventils öffnende Rückströmdrossel angeordnet ist.

Die Rückströmdrossel kann aus einem sich in Richtung des Steuerventils öffnenden Rückschlagventil und einer parallel dazu angeordneten Drosselbohrung bestehen, wobei die Rückströmdrossel beispielsweise einen mit einer Drosselbohrung versehenen federbelasteten Ventilteller aufweisen kann, der entgegen der Öffnungsrichtung durch eine Ventilfeder auf einen Ventilsitz gedrückt wird. Eine Rückströmdrossel dieser Art ist beispielsweise in der DE 196 12 721 A1 offenbart.

Durch die Rückströmdrossel kann über das sich öffnende Rückschlagventil der Rückströmdrossel einerseits ein rasches Füllen der Hochdruckräume erfolgen. Andererseits werden aus der Verstellung der Pleuelstange resultierende rücklaufende Druckwellen gedämpft und der Rückfluss in Richtung des großen Pleuelauges klein gehalten.

Die Druckölversorgung der Hochdruckräume erfolgt über die Zulaufleitung vom großen Pleuelauge bzw. das große Pleuellager der Pleuelstange.

Die Achse der Aufnahmebohrung des Stellkolbens des Steuerventils ist bevorzugt normal zur Pleuellängsachse in der Längsmittelebene der Pleuelstange angeordnet. Um eine einfache Fertigung des zweiten Ölkanals und des zweiten Rücklaufkanals zu ermöglichen, ist es vorteilhaft, wenn der zweite Ölkanal und/oder der zweite Rücklaufkanal außerhalb einer die Pleuellängsachse einschließenden Längsmittelebene der Pleuelstange - und somit seitlich neben der Aufnahmebohrung - angeordnet sind. Die Verbindung zwischen den seitlichen zweiten Öl- und Rücklaufkanälen und der Aufnahmebohrung erfolgt über kurze Querbohrungen. Der erste Ölkanal und der erste Rücklaufkanal können in der Längsmittelebene angeordnet sein.

Die zweiten Öl- und Rücklaufkanäle können ausgehend vom großen Pleuelauge der Pleuelstange gebohrt werden. Die Herstellung der ersten Öl- und Rücklaufkanäle kann von der Seite des Führungszylinders aus erfolgen.

Eine zuverlässige und einfache Lösung für die Änderung des Verdichtungsverhältnisses kann realisiert werden, wenn der Zuführquerschnitt zum ersten Ölkanal durch das Steuerventil in der zweiten Stellung verschließbar und in der ersten Stellung freigebbar ist, wobei vorzugsweise der Zuführquerschnitt zum zweiten Ölkanal durch das Steuerventil in der ersten Stellung verschließbar und in der zweiten Stellung freigebbar ist.

In einer besonders einfachen und äußerst kompakt bauenden Ausführungsvariante der Erfindung ist vorgesehen, dass nur die ersten und zweiten Rücklaufkanäle durch das Steuerventil steuerbar sind. Dadurch kann der Stellkolben sehr kurz gehalten werden.

Die Betätigung des Steuerkolbens erfolgt bevorzugt hydraulisch durch Öldruck entgegen der Kraft einer Rückstellfeder.

Alternativ oder zusätzlich kann vorgesehen sein, dass die Betätigung des Steuerkolbens elektromagnetisch erfolgt, wobei vorzugsweise der Steuerkolben aus ferromagnetischem Material besteht oder ein Permanentmagnetelement aufweist, welches mit einer im Kurbelgehäuse angeordneten Induktionsspule zusammenwirkt. Der Steuerkolben kann durch zumindest ein vorzugsweise durch einen federbelasteten Druckteil gebildetes Arretierelement in zumindest einer Stellung arretierbar sein, wobei vorzugsweise das Arretierelement einen federbelasteten Druckkörper aufweist, welcher quer zur Bewegungsrichtung des Steuerkolbens auf diesen einwirkt.

Die Erfindung wird im Folgenden an Hand der Fig. näher erläutert. Es zeigen:
- Fig. 1: eine erfindungsgemäße Pleuelstange in einem Schnitt gemäß der Linie I - I in Fig. 2 in einer ersten Ausführungsvariante in einer ersten Schaltstellung des Schaltventils;
- Fig. 2: diese Pleuelstange in einer Seitenansicht;
- Fig. 3: die Pleuelstange in einem Schnitt analog zur Fig. 1 in einer zweiten Schaltstellung des Schaltventils;
- Fig. 4: die Pleuelstange in einem Schnitt gemäß der Linie IV - IV in Fig. 1;
- Fig. 5: die Pleuelstange in einem Schnitt gemäß der Linie V - V in Fig. 1;
- Fig. 6: eine Schaltanordnung für die in Fig. 1 dargestellte erste Schaltstellung des Steuerventils in einer schematischen Darstellung;
- Fig. 7: eine Schaltanordnung für die in Fig. 3 dargestellte zweite Schaltstellung des Steuerventils in einer schematischen Darstellung;
- Fig. 8: das Detail VIII aus Fig. 1;
- Fig. 9: das Detail IX aus Fig. 3;
- Fig. 10: eine erfindungsgemäße Pleuelstange in einem Schnitt analog zu Fig. 1 in einer zweiten Ausführungsvariante in einer ersten Schaltstellung des Schaltventils mit in die Schnittebene gedrehten zweiten Öl- und Rücklaufkanälen;
- Fig. 11: diese Pleuelstange in einer zweiten Schaltstellung des Schaltventils;
- Fig. 12: eine Schaltanordnung für die in Fig. 10 dargestellte erste Schaltstellung des Steuerventils in einer schematischen Darstellung;
- Fig. 13: eine Schaltanordnung für die in Fig. 11 dargestellte zweite Schaltstellung des Steuerventils in einer schematischen Darstellung; und
- Fig. 14: eine erfindungsgemäße Pleuelstange in einer dritten Ausführungsvariante.

Funktionsgleiche Teile sind in den Ausführungsvarianten mit gleichen Bezugszeichen versehen.

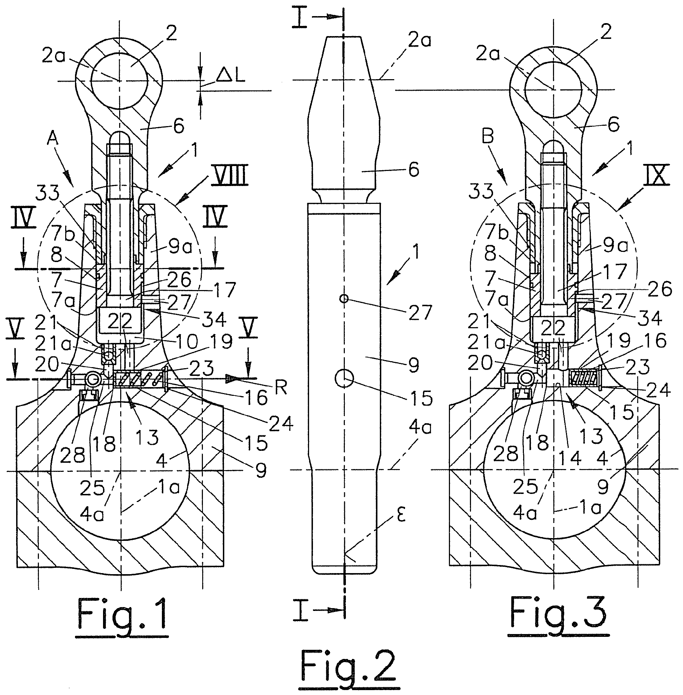

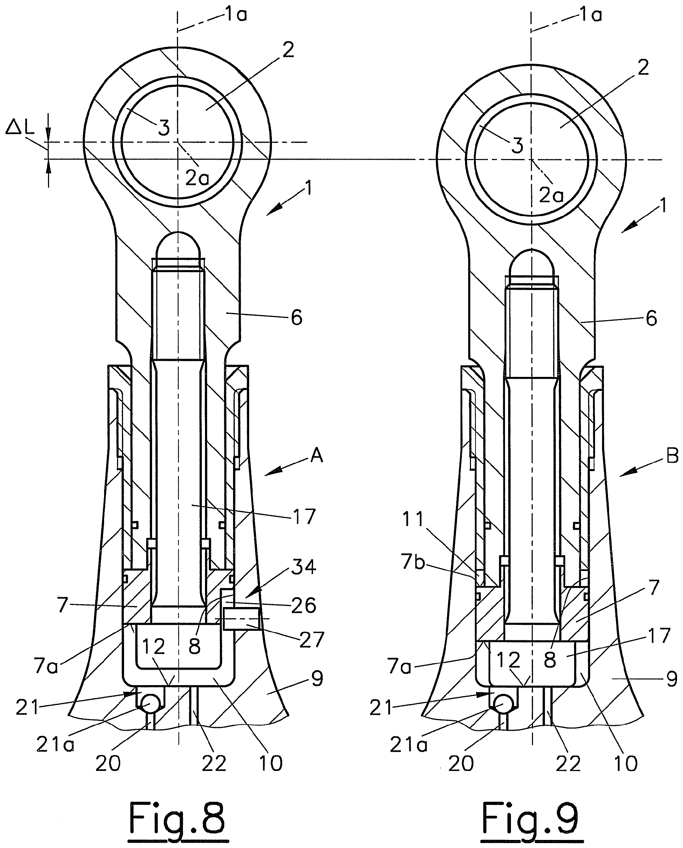

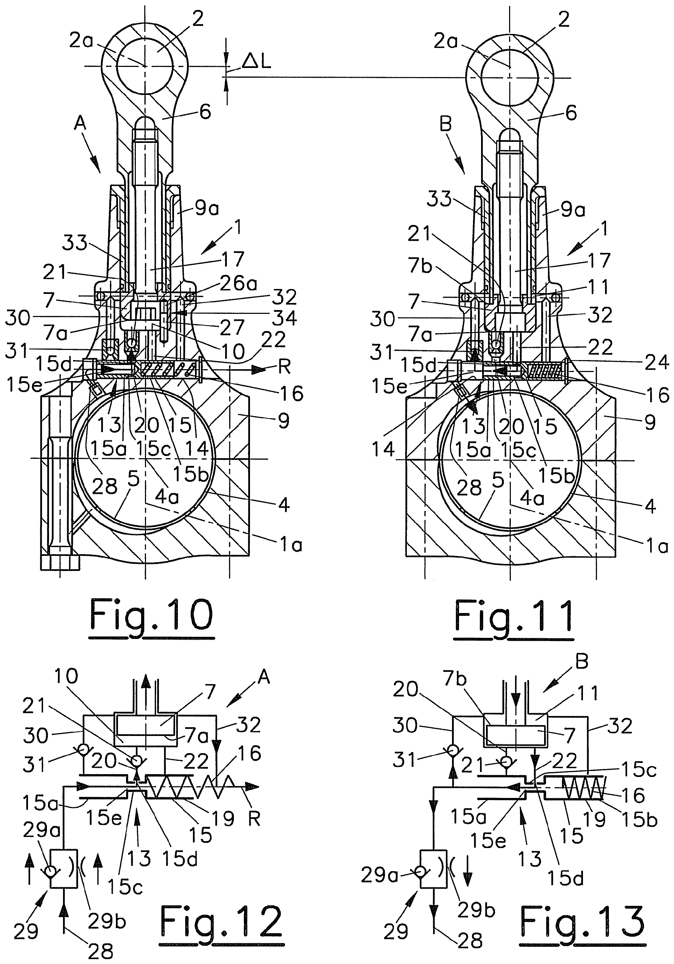

In den Fig. ist jeweils eine zweigeteilte Pleuelstange 1, mit einem kleinen Pleuelauge 2 für ein in Fig. 8 ersichtliches Kolbenbolzenlager 3 und ein großes Pleuelauge 4 für ein Kurbelzapfenlager 5 (siehe Fig. 10 und Fig. 11) einer Brennkraftmaschine dargestellt. Die Drehsymmetrieachsen des kleinen bzw. großen Pleuelauges 2, 4 sind mit 2a bzw. 4a bezeichnet. Die Längsachse der Pleuelstange 1 ist mit 1a, eine auf den Drehsymmetrieachsen 2a und 4a des kleinen und großen Pleuelauges 2, 4 normal stehende und die Längsachse 1a der Pleuelstange 1 beinhaltende Längsmittelebene der Pleuelstange 1 ist mit ε bezeichnet (Fig. 2).

Die Pleuelstange 1 weist einen oberen ersten Stangenteil 6 mit dem kleinen Pleuelauge 2 und einen unteren zweiten Stangenteil 9 mit dem großen Pleuelauge 4 auf. Der erste Stangenteil 6 ist gegenüber dem zweiten Stangenteil 9 zwischen einer ausgezogenen Lage A (Fig. 1, Fig. 6, Fig. 8, Fig. 10 und Fig. 12) und einer eingeschobenen Lage B (Fig. 3, Fig. 7, Fig. 9, Fig. 11 und Fig. 13) um einen aus Fig. 1, Fig. 8 und Fig. 10 ersichtlichen Verstellbereich ΔL in Richtung der Längsachse 1a der Pleuelstange 1 verstellbar. Im oberen ersten Stangenteil 6 ist ein im Wesentlichen zylindrisches Kolbenelement 7 mit einer in den Ausführungsbeispielen durch eine Innensechskantschraube gebildeten Befestigungsschraube 17 befestigt. Bei den in den Fig. 1 und Fig. 3 dargestellten ersten Ausführungsvariante ragt der Schraubenkopf der Befestigungsschraube 17 vom Kolbenteil 7 vor, bei der in den Fig. 10 und Fig. 11 dargestellten zweiten Ausführungsvariante ist der Schraubenkopf in den Kolbenteil 7 versenkt.

Das Kolbenelement 7 ist in einem Führungszylinder 8 des unteren zweiten Stangenteils 9 der Pleuelstange 1 axial verschiebbar geführt, wobei zwischen einer dem großen Pleuelauge 4 zugewandten ersten Stirnfläche 7a des Kolbenelementes 7 und dem zweiten Stangenteil 9 in zumindest einer Lage der beiden Stangenteile 6, 9 ein erster Hochdruckraum 10 aufgespannt wird. Wie aus den Fig. 1 und Fig. 3 ersichtlich ist, ragt beim ersten Ausführungsbeispiel der Schraubenkopf der Befestigungsschraube 17 von der ersten Stirnfläche 7a des Kolbenelementes 7 in den ersten Hochdruckraum 10 vor, was aber keinen Einfluss auf die Funktion hat, da nur die Projektion der Wirkfläche in Axialrichtung relevant ist. Die gegen den ersten Hochdruckraum 10 orientierte Wirkfläche des Kolbenelementes 7 wird teilweise von der ersten Stirnfläche 7a und teilweise von der Stirnfläche des Schraubenkopfes der Befestigungsschraube 17 gebildet. Das als Stufenkolben ausgebildete Kolbenelement 7 weist eine dem kleinen Pleuelauge 2 zugewandte zweite Stirnfläche 7b auf, welche an einen zweiten Hochdruckraum 11 grenzt, dessen zylindrische Mantelfläche vom Führungszylinder 8 des zweiten Stangenteils 9 gebildet wird. Unter einem Stufenkolben wird im Allgemeinen ein Kolben - im vorliegenden Fall ein "zweiseitig wirkender Kolben" - mit unterschiedlich großen Wirkflächen verstanden, wobei eine der Wirkflächen (hier: die gegen den zweiten Hochdruckraum 11 orientierte Wirkfläche) als Ringfläche und die andere Wirkfläche als Kreisfläche ausgebildet ist. Durch die unterschiedlichen Wirkflächen lassen sich die hier beschriebenen Druckverhältnisse realisieren.

Die ringförmigen ersten und zweite Stirnflächen 7a, 7b bilden Druckangriffsflächen für ein in die Hochdruckräume 10, 11 geleitetes und unter Druck stehendes Betätigungsmedium, beispielsweise Motoröl.

Die an den ersten Hochdruckraum 10 grenzende erste Stirnfläche 7a des Kolbenelementes 7 wird vom Motoröl über den ersten Ölkanal 20 beaufschlagt, in welchem ein in Richtung des ersten Hochdruckraumes 10 öffnendes erstes Rückschlagventil 21 angeordnet ist. Vom ersten Hochdruckraum 10 geht ein erster Rücklaufkanal 22 aus, über welchen der erster Hochdruckraum 10 druckentlastbar ist.

In den an die zweite Stirnfläche 7b des Kolbenelementes 7 grenzenden zweiten Hochdruckraum 11 mündet eine zweiter Ölkanal 30 ein, in welchem ein in Richtung des zweiten Hochdruckraumes 11 öffnendes zweites Rückschlagventil 31 angeordnet ist. Über diesen kann der zweite Hochdruckraum 11 mit Öldruck beaufschlagt werden. Die Druckentlastung des zweiten Hochdruckraumes 11 erfolgt über einen vom zweiten Hochdruckraum 11 ausgehenden zweiten Rücklaufkanal 32.

Die Ölzufuhr, Sperre und Ablauf des Öles wird von einem Steuerventil 13, welches einen in einer Aufnahmebohrung 14 axial zwischen einer ersten Stellung und einer zweiten Stellung verschiebbaren Stellkolben 15 aufweist, der in bekannter Weise über den Öldruck an der nicht weiter dargestellten Ölpumpe mittels eines ebenfalls nicht dargestellten Druckregelventils gesteuert wird, wobei beispielsweise ein nicht dargestellter Aktuator eine Feder im Regelventil der Ölpumpe mehr oder weniger vorspannt.

Durch Verschieben des Stellkolbens 15 kann entweder der erste, oder der zweite Rücklaufkanal 22, 32 geöffnet bzw. gesperrt werden, wobei der jeweils andere Rücklaufkanal 32, 22 gesperrt bzw. geöffnet wird.

Bei der in den Fig. 1 bis Fig. 9 dargestellten ersten Ausführungsvariante steuert der Stellkolben 15 nur die ersten und zweiten Rücklaufkanäle 22 und 32 auf bzw. zu. Die ersten und zweiten Ölkanäle 20, 30 werden vom Stellkolben 15 nicht gesteuert.

Dagegen weist der Stellkolben 15 bei der in den Fig. 10 bis Fig. 12 gezeigten Ausführung einen ersten Kolbenteil 15a zur Ansteuerung der ersten und zweiten Ölkanäle 20, 30 und einen zweiten Kolbenteil 15b zur Ansteuerung der ersten und zweiten Rücklaufkanäle 22, 32 auf, wobei zwischen den beiden Kolbenteilen 15a, 15b eine vorzugsweise in einer Ringnut 15c angeordnete Radialbohrung 15d in den Stellkolben 15 eingeformt ist, welche in einer Axialbohrung 15e des Stellkolben 15 einmündet. Die Axialbohrung 15e ist in Richtung des vom großen Pleuelauge 4 bzw. dem Kurbelzapfenlager 5 ausgehenden und in die Aufnahmebohrung 14 einmündenden Ölversorgungskanals 28 offen ausgebildet.

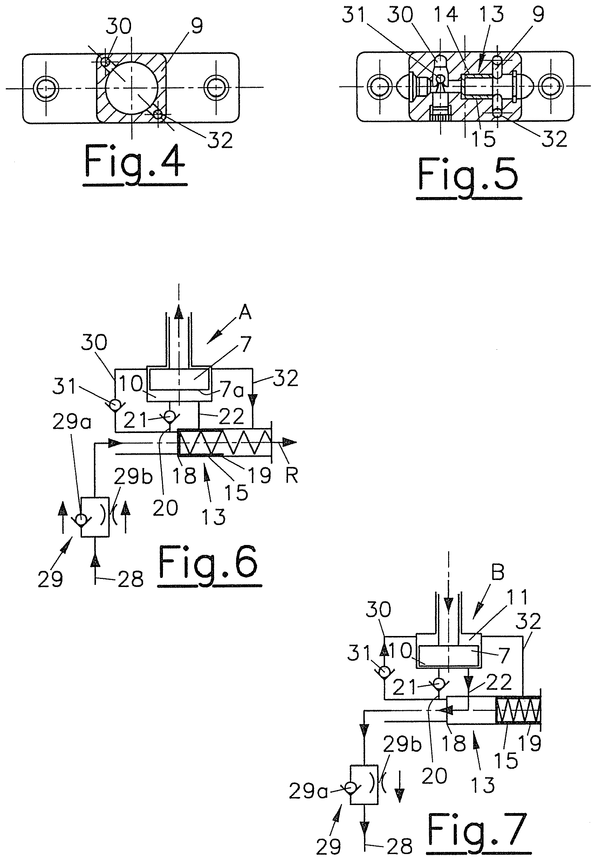

Die Fig. 1 zeigt eine Pleuelstange 1 in einer ersten Ausführungsvariante in einer einem hohen Verdichtungsverhältnis zugeordneten herausgezogenen Lage A, die mit der in Fig. 6 schematisch dargestellten ersten Stellung des Steuerventils 13 korreliert und Fig. 3 zeigt die Pleuelstange 1 in einer einem niedrigen Verdichtungsverhältnis zugeordneten eingeschobenen Lage B, die mit einer aus Fig. 7 ersichtlichen zweiten Stellung des Steuerventils 13 korreliert.

Die Fig. 10 zeigt eine ein hohes Verdichtungsverhältnis aufweisende Pleuelstange 1 in einer zweiten Ausführungsvariante mit in die Schnittebene gedrehten zweiten Öl- und Rücklaufkanälen 30, 32, in einer einem hohen Verdichtungsverhältnis zugeordneten herausgezogenen Lage A, die mit der in Fig. 12 gezeigten ersten Stellung des Steuerventils 13 korreliert. Die Fig. 11 weist ebenfalls in die Schnittebene gedrehte zweite Öl- und Rücklaufkanäle 30, 32 auf und zeigt die Pleuelstange aus Fig. 10 in einer einem niedrigen Verdichtungsverhältnis zugeordneten eingeschobenen Lage B, die mit einer in Fig. 13 dargestellten zweiten Stellung des Steuerventils 13 korreliert.

Bei Niedriglast wird von der Ölpumpe der Öldruck drehzahl- und lastabhängig auf niedrigen Druck geregelt, zum Beispiel auf 1,8 bar. Der Stellkolben 15 wird dabei - wie etwa in den in den Fig. 1 und Fig. 6 gezeigt ist - in seiner quer zur Längsachse 1a der Pleuelstange 1 angeordneten Aufnahmebohrung 14 durch die Kraft der Rückstellfeder 16 bei niedrigem Öldruckniveau gegen einen ersten Anschlag 18 gedrückt, da die Federkraft derRückstellfeder 16 größer als die vom Öldruck verursachte Kolbenkraft des Stellkobens 15 ist. In dieser Stellung ergibt sich eine Strömungsverbindung zwischen der Ölversorgung aus dem Kurbelzapfenlager 5 und dem ersten Rückschlagventil 21, das in den unter der ersten Stirnfläche 7a des Kolbenelementes 7 liegenden ersten Hochdruckraum 10 führt. Solange der Kolben der Brennkraftmaschine durch seine Massenkraft die beiden Pleuelstangenteile 6, 9 auseinanderzieht, fließt Öl durch das erste Rückschlagventil 21 in den ersten Hochdruckraum 10, bis dieser gefüllt ist. Das Volumen des Hochdruckraumes 10 ist durch eine in den Schaftteil 9a des zweiten Stangenteiles 9 eingeschraubten, durch eine Anschlaghülse gebildeten Halteteil 33 begrenzt, weleher den maximal möglichen Hub des Kolbenelementes 7 definiert. Je nach Länge dieser Anschlaghülse lässt sich der Verstellbereich ΔL der Pleuellänge der langenverstellbaren Pleuelstange 1 beliebig einstellen.

Das Motoröl wird von der Massenkraft über das in einem ersten Ölkanal 20 angeordnete erste Rückschlagventil 21 unter die erste Stirnfläche 7a des Kolbenelementes 7 angesaugt. Der Stellkolben 15 sperrt mit seinem Zylindermantel 19 den vom ersten Hochdruckraum 10 ausgehenden ersten Rücklaufkanal 22. Das angesaugte Öl kann nicht entweichen und ist nicht kompressibel. Als Folge wird das Kolbenelement 7 samt dem ersten Stangenteil 6 angehoben und die Pleuelstange 1 somit länger. Auf diese Weise kann ein höheres Verdichtungsverhältnis bei niedrigem Öldruck eingestellt werden.

Das Kolbenelement 7 verdrängt beim Auseinanderziehen der Pleuelstange 1 das Öl aus dem ringförmigen zweiten Hochdruckraum 11 über den zweiten Rücklaufkanal 32, den der Stellkolben 15 des Steuerventils 13 in dieser ersten Stellung freigibt. Das Öl fließt zum Kurbelraum der Brennkraftmaschine hin gemäß dem in den Fig. 1, Fig. 6, Fig. 10 und Fig. 12 gezeigten Pfeil R ab.

Wird nun der Regeldruck der Ölpumpe bei hoher Last - ebenfalls last- und drehzahlabhängig - auf ein höheres Niveau, zum Beispiel auf 3,5 bar, geregelt, so wird der Stellkolben 15, wie in Fig. 3 und Fig. 11 dargestellt ist, in seiner Aufnahmebohrung 14 vom Motoröl gegen den zweiten Anschlag 23 gedrückt, da die vom Öldruck verursachte Kolbenkraft des Stellkolbens 15 stärker ist als die Federkraft der Rückstellfeder 16. Die Rückstellfeder 16 wird dabei komprimiert. Der zweite Anschlag 23 kann beispielsweise von einer Führung für die Rückstellfeder 16 und/oder einem in einer Nut der Aufnahmebohrung 14 eingesetzten Sicherungsring 24 gebildet sein.

In dieser Stellung ergibt sich eine Strömungsverbindung zwischen dem ersten Hochdruckraum 10 und dem zweiten Rückschlagventil 31, welches im zum zweiten Hochdruckraum 11 führenden zweiten Ölkanal 32 angeordnet ist . Die Gaskraft drückt den ersten Stangenteil 6 samt dem Kolbenelement 7 in den Fig. nach unten in Richtung des großen Pleuelauges 4, weil der Abfluss aus dem ersten Hochdruckraum 10 durch den ersten Rücklaufkanal 22 vom Stellkolben 15 geöffnet wurde. Der durch die Gaskraft in diesem ersten Hochdruckraum 10 entstandene Druck, der etwa den 20-fachen Betrag des Gasdruckes im Brennraum erreichen kann, hilft jetzt mit, den ringförmigen zweiten Hochdruckraum 11 zu füllen. Der Abfluss durch den zweiten Rücklaufkanal 32 aus diesem zweiten Hochdruckraum 11 wird vom Stellkolben 15 in dieser zweiten Stellung versperrt. In dieser zweiten Stellung drückt der Gasdruck aus dem nicht weiter ersichtlichen Brennraum das Kolbenelement 7 ganz nach unten, wodurch sich ein kleineres Verdichtungsverhältnis einstellt. Durch den entstandenen Druck wird der erste Stangenteil 6 der Pleuelstange 1 in den Fig. nach unten in Richtung des großen Pleuelauges 4 gegen die kurbelseitige Stirnfläche 12 des Führungszylinders 8 gepresst, welcher einen Anschlag für das Kolbenelement 7 in der eingeschobenen Lage des ersten Stangenteils 6 bildet.

Das Kolbenelement 7 kann nicht mehr abheben, weil durch das für das Füllen des zweiten Hochdruckraumes 11 zuständige offene zweite Rückschlagventil 31 Öl in den zweiten Hochdruckraum 11 gelangt und das Kolbenelement 7 dadurch weiterhin gegen den Boden des Sack Loches gepresst bleibt. Durch den im ersten Hochdruckraum 10 ansteigenden Druck wird das erste Rückschlagventil 21 in seiner geschlossen Stellung gehalten.

Bei der zweiten Ausführungsvariante wird zusätzlich noch durch den in Fig. 13 linken Kolbenteil 15a der erste Ölkanal 20 versperrt.

Da das Volumen des zweiten Hochdruckraumes 11 kleiner ist als das Volumen des ersten Hochdruckraumes 10, muss das Öl, das im zweiten Hochdruckraum 11 keinen Platz mehr findet, über die eine Rückströmdrossel 29 aufweisende Zuführleitung 25, welche einen in das große Pleuelauge mündenden Ölversorgungskanal 28 aufweist, in Richtung des Kurbelzapfenlagers 5 abfließen können. Dies wird dadurch erreicht, dass in der zweiten Stellung des Stellkobens 15 der erste Rücklaufkanal 22 für das Motoröl durch den Stellkolben 15 freigegeben wird, wie aus den Fig. 7 und Fig. 13 ersichtlich ist.

Besonders vorteilhaft ist, dass auch in einem unteren Leerlaufbereich der Brennkraftmaschine, wenn der Motoröldruck kleiner als der Regeldruck ist, ein höheres Verdichtungsverhältnis eingestellt werden kann, was den Verbrauch im Niederlastbereich verbessert und einen Kaltstart erleichtert. Um das hohe Verdichtungsverhältnis über längere Zeit beizubehalten, müssen die Leckageverluste durch den Spielsitz des Führungszylinders 8 aus dem ersten Hochdruckraum 10 unter der ersten Stirnfläche 7a des Kolbenelementes 7 in den selben wieder nachgefüllt werden. Dies geschieht dadurch, dass die Massenkraft des (nicht weiter dargestellten) Kolbens und des ersten Stangenteils 6 das Motoröl durch die Zuführleitung 25 über das erste Rückschlagventil 21 (Nachfüllventil) in den ersten Hochdruckraum 10 unter der ersten Stirnfläche 7a ansaugt. Beim nachfolgenden Verdichtungstakt baut sich der Hochdruck wieder auf und die kleine Kugel 21a im ersten Rückschlagventil 21 verhindert das Entweichen des Öles aus dem ersten Hochdruckraum 10. Dieser Vorgang wiederholt sich bei jedem Arbeitszyklus. Will man das Verdichtungsverhältnis wieder senken, wird der Regeldruck der Ölpumpe erhöht und der Stellkolben 15 vom Öldruck gegen den zweiten Anschlag 23 gedrückt und die Strömungsverbindung zwischen dem ersten Rücklaufkanal 22 über die Zuführleitung 25 und den Ölversorgungskanal 28 zum Kurbelzapfenlager 5 somit geöffnet. Der Gasdruck drückt das Kolbenelement 7 nach unten und das niedrigere Verdichtungsverhältnis ist wieder eingestellt. Der Stellkolben 15 wird in seiner Aufnahmebohrung 14 nur durch den Öldruck und durch die Rückstellfeder 16 zwischen den Anschlägen 18 bei niedrigem Öldruck und 23 bei hohem Öldruck hin- und hergeschoben.

Das Kolbenelement 7 weist eine Verdrehsicherung 34 auf, welche im ersten Ausführungsbeispiel (siehe Fig. 1 und Fig. 2) durch eine in seiner Mantelfläche eingeformte axiale Nut 26 gebildet ist, in welche ein zylindrischer Stift 27 eingreift. "Axial" bedeutet hier im Wesentlichen parallel zur Längsachse 1a der Pleuelstange 1, wohingegen der zylindrische Stift 27 radial, also im Wesentlichen normal zu besagter Längsachse 1a, in die axiale Nut 26 eingreift. In der zweiten Ausführungsvariante (siehe Fig. 10 und Fig. 11) weist die Verdrehsicherung 34 eine axiale Bohrung 26a in der ersten Stirnfläche 7a des Kolbenelementes 7 auf, in welche ein entsprechend im zweiten Stangenteil 9 angeordneter zylindrischer Stift 27 eingreift, dessen in die Bohrung 26a eingreifende Länge größer ist, als der Verstellweg ΔL.

Der Stift 27 verhindert ein Verdrehen des Kolbenelementes 7 und somit des ersten Stangenteils 6 gegenüber dem zweiten Stangenteil 9.

Die Ölversorgung der Aufnahmebohrung 14 des Stellkolbens 15 erfolgt über die Zuführleitung 25 und den Ölversorgungskanal 28. Dieser mündet im großen Pleuelauge 4 und ist somit mit dem Kurbelzapfenlager 5 strömungsverbunden.

Die im Ölversorgungskanal 28 angeordnete Rückströmdrossel 29 besteht aus einem sich in Richtung des Steuerventils 13 öffnenden Rückschlagventil 29a und einer parallel dazu angeordneten Drosselbohrung 29b, wobei die Rückströmdrossel 29 beispielsweise - wie an sich bekannt - einen mit einer Drosselbohrung versehenen federbelastete Ventilteller aufweisen kann, der entgegen der Öffnungsrichtung durch eine Ventilfeder auf einen Ventilsitz gedrückt wird (nicht weiter dargestellt). Durch das in Richtung des Schaltventils 13 öffnende Rückschlagventil 29a der Rückströmdrossel kann ein rasches Füllen des ersten Hochdruckraumes 10 gewährleistet werden. Andererseits können die Druckwellen, die aus der Verstellung der beiden Stangenteile 6, 9 zueinander resultieren, gegenüber dem Bereich des Kurbelzapfenlagers 3 gedämpft, aber der Durchfluss in Richtung des Kurbelzapfenlagers 3 klein gehalten werden. Die parallelgeschaltete Drosselbohrung 29b und das Rückschlagventil 29a können in einem nicht dargestellten gemeinsamen zylindrischen Körper untergebracht werden.

Aus Montagegründen sind erster Stangenteil 6 und Kolbenlelement 7 aus verschiedenen Teilen ausgeführt und über die Befestigungsschraube 17 miteinander fest verbunden.

Zweckmäßigerweise wird das Gewinde für die Befestigungsschraube 17 in einen Bereich des ersten Stangenteils 6 gelegt, der eine ausreichend große Querschnittsfläche aufweist und somit außerhalb des Knickbereiches des Stangenteils 6 liegt. Die Verschraubung muss ausreichend dimensioniert werden, um die Massenkraft aufzunehmen zu können.

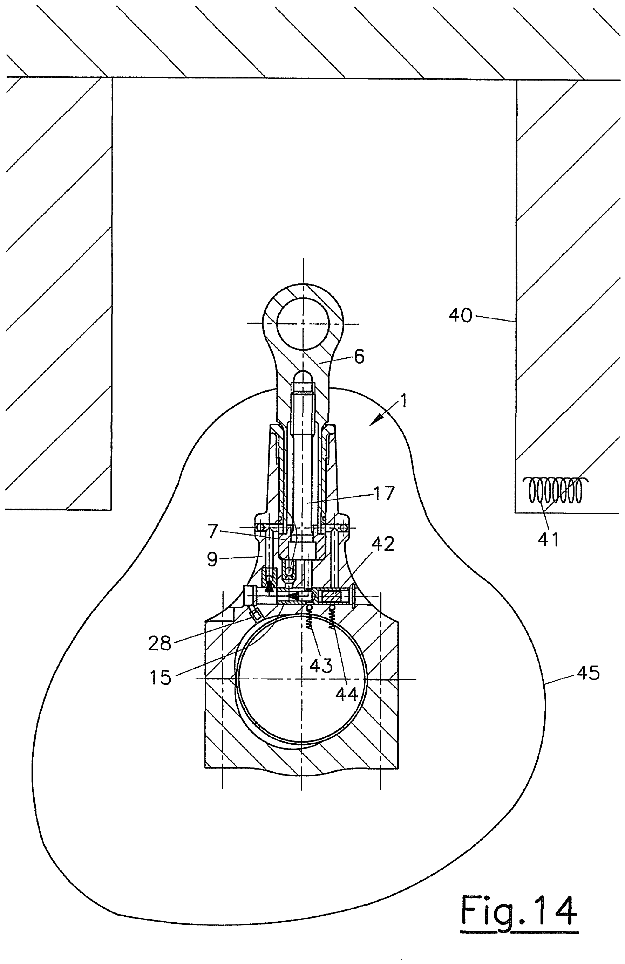

Alternativ zur Betätigung durch Öldruck entgegen der Rückstellkraft der Rückstellfeder 16 kann die Betätigung des Stellkolbens 15 auch elektromagnetisch durch eine im Kurbelgehäuse 40 angeordnete Induktionsspule 41 erfolgen, wie in Fig. 14 schematisch gezeigt ist. Dabei kann der Stellkolben 15 aus ferromagnetischem Material bestehen oder ein Permanentmagnetelement 42 aufweisen und zwischen zwei mittels Arretierelementen 43, 44 arretierbaren Positionen durch elektromagnetische Kräfte hin- und her bewegt werden. Alternativ dazu kann der magnetische Stellkolben 15 - wie in den in den Fig. 1 bis Fig. 13 gezeigten ersten und zweiten Ausführungsvarianten - durch eine Rückstellfeder 16 in eine mit der ausgezogenen Lage A des ersten Stangenteils 6 korrespondierende erste Stellung und entgegen der Kraft der Rückstellfeder 16 - nun aber elektromagnetisch - in eine mit der eingeschobenen Lage B des ersten Stangenteils 6 korrespondierende zweite Stellung gebracht werden. Die Arretierelemente 43, 44 können beispielsweise durch federbelastete Druckkörper gebildet sein, die quer zur Bewegungsrichtung des Stellkolbens 15 auf diesen einwirken, wobei in der arretierten Stellung die Druckkörper in Rillen oder Ausnehmungen des Stellkolbens 15 eingreifen. Mit Bezugszeichen 45 ist in Fig. 14 die Pleuelgeige der Pleuelstange 1 angedeutet.

## Patentansprüche

1. Längenverstellbare Pleuelstange (1) für eine Hubkolbenbrennkraftmaschine mit zumindest einem ersten Stangenteil (6) mit einem kleinen Pleuelauge (2) und einem zweiten Stangenteil (9) mit einem großen Pleuelauge (4), welche beiden Stangenteile (6, 9) teleskopartig zu- und/oder ineinander verschiebbar sind, wobei der zweite Stangenteil (9) einen Führungszylinder (8) und der erste Stangenteil (6) ein im Führungszylinder (8) längsverschiebbares Kolbenelement (7) ausbilden, wobei auf der dem großen Pleuelauge (4) zugewandten Seite des Kolbenelementes (7) zwischen dem zweiten Stangenteil (9) und dem Kolbenelement (7) ein erster Hochdruckraum (10) aufgespannt ist, in den zumindest ein erster Ölkanal (20) einmündet, in welchem insbesondere ein in Richtung des ersten Hochdruckraumes (10) öffnendes erstes Rückschlagventil (21) angeordnet ist, wobei vom ersten Hochdruckraum (10) zumindest ein erster Rücklaufkanal (22) ausgeht, dessen Abflussquerschnitt durch ein Steuerventil (13) in einer ersten Stellung verschließbar und in einer zweiten Stellung freigebbar ist, wobei das Steuerventil (13) einen in einer Aufnahmebohrung (14) des zweiten Stangenteils (4) der Pleuelstange (1) axial verschiebbaren Stellkolben (15) aufweist, welcher insbesondere durch eine Rückstellfeder (16) in die erste Stellung und durch eine Betätigungskraft entgegen der Kraft der Rückstellfeder (16) in die zweite Stellung verschiebbar ist, wobei das Kolbenelement (7) als zweiseitig wirkender Kolben, vorzugsweise als Stufenkolben, ausgebildet ist, **dadurch gekennzeichnet, dass** der Stellkolben (15) elektromagnetisch und/oder durch den Öldruck der Brennkraftmaschine hydraulisch betätigbar ist, wobei auf der dem kleinen Pleuelauge (2) zugewandten Seite des Kolbenelementes (7) zwischen einem mit dem zweiten Stangenteil (9) fest verbundenen Halteteil (33) und dem Kolbenelement (7) ein zweiter Hochdruckraum (11) aufgespannt ist, in den zumindest ein zweiter Ölkanal (30) einmündet, in welchem ein in Richtung des zweiten Hochdruckraumes (11) öffnendes zweites Rückschlagventil (31) angeordnet ist.

2. Pleuelstange (1) nach Anspruch 1, **dadurch gekennzeichnet, dass** die erste Stellung des Steuerventils (13) einer ausgezogenen Lage (A) des ersten Stangenteils (6) und die zweite Stellung des Steuerventils (13) einer eingeschobenen Lage (B) des ersten Stangenteils (6) zugeordnet ist.

3. Pleuelstange (1) nach Anspruch 1 oder 2, **dadurch gekennzeichnet, dass** der Stellkolben (15) bei einem ersten, niedrigen Öldruckniveau der Brennkraftmaschine die erste Stellung einnimmt und bei einem zweiten, höheren Öldruckniveau der Brennkraftmaschine die zweite Stellung.

4. Pleuelstange (1) nach Anspruch 3, **dadurch gekennzeichnet, dass** sowohl in der ausgezogenen Lage (A), als auch in der eingeschobenen Lage (B) der erste Stangenteil (6) relativ zum zweiten Stangenteil (9) hydraulisch arretierbar ist.

5. Pleuelstange (1) nach einem der Ansprüche 1 bis 4, **dadurch gekennzeichnet, dass** vom zweiten Hochdruckraum (11) zumindest ein zweiter Rücklaufkanal (32) ausgeht, dessen Abflussquerschnitt durch das Steuerventil (13) in der zweiten Stellung verschließbar und in der ersten Stellung freigebbar ist.

6. Pleuelstange (1) nach einem der vorgehenden Ansprüche, **dadurch gekennzeichnet, dass** durch das Steuerventil (13) nur die ersten- und zweiten Rücklaufkanäle (22, 32) steuerbar sind.

7. Pleuelstange (1) nach einem der Ansprüche 1 bis 6, **dadurch gekennzeichnet, dass** in einer Zuführleitung (25) zum Steuerventil (13) zumindest eine Rückströmdrossel (29) angeordnet ist.

8. Pleuelstange (1) nach einem der Ansprüche 4 bis 7, **dadurch gekennzeichnet, dass** der zweite Ölkanal (30) und/oder der zweite Rücklaufkanal (32) außerhalb einer die Längsachse (1a) der Pleuelstange (1) einschließenden Längsmittelebene (ε) der Pleuelstange (1) angeordnet ist.

9. Pleuelstange (1) nach einem der Ansprüche 1 bis 8, **dadurch gekennzeichnet, dass** der Halteteil (33) durch eine in den Führungszylinder (8) ragende austauschbare Anschlaghülse gebildet ist, wobei vorzugsweise die Anschlaghülse mit dem zweiten Stangenteil (9) verschraubt ist.

10. Pleuelstange (1) nach einem der Ansprüche 1 bis 9, **dadurch gekennzeichnet, dass** der Zuführquerschnitt zum ersten Ölkanal (20) durch das Steuerventil (13) in der zweiten Stellung verschließbar und in der ersten Stellung freigebbar ist.

11. Pleuelstange (1) nach einem der Ansprüche 1 bis 10, **dadurch gekennzeichnet, dass** der Zuführquerschnitt zum zweiten Ölkanal (30) durch das Steuerventil (13) in der ersten Stellung verschließbar und in der zweiten Stellung freigebbar ist.

12. Pleuelstange (1) nach einem der Ansprüche 1 bis 11, **dadurch gekennzeichnet, dass** die Betätigung des Stellkolbens (15) hydraulisch durch Öldruck oder elektromagnetisch - entgegen der Kraft der Rückstellfeder (16) - erfolgt.

13. Pleuelstange (1) nach Anspruch 12, **dadurch gekennzeichnet, dass** der Stellkolben (15) aus ferromagnetischem Material besteht oder ein Permanentmagnetelement (42) aufweist, welches mit einer im Kurbelgehäuse angeordneten Induktionsspule (41) zusammenwirkt.

14. Pleuelstange (1) nach Anspruch 12 oder 13, **dadurch gekennzeichnet, dass** der Stellkolben (15) durch zumindest ein vorzugsweise durch einen federbelasteten Druckteil gebildetes Arretierelement (43, 44) in zumindest einer Stellung arretierbar ist, wobei vorzugsweise das Arretierelement (43, 44) einen federbelasteten Druckkörper aufweist, welcher quer zur Bewegungsrichtung des Stellkolbens (15) auf diesen einwirkt.

## Claims

1. Length-adjustable connecting rod (1) for a reciprocating-piston machine having at least one first rod part (6) having a small connecting rod eye (2) and a second rod part (9) having a large connecting rod eye (4), which two rod parts (6, 9) can be moved in relation to each other and/or in each other in a telescopic manner, wherein the second rod part (9) forms a guiding cylinder (8) and the first rod part (6) forms a piston element (7) that can be longitudinally displaced in the guiding cylinder (8), wherein on the side of the piston element (7) facing the large connecting rod eye (4) between the second rod part (9) and the piston element (7), a first high-pressure chamber (10) is positioned, into which at least one first oil channel (20) leads, in which in particular a first check valve (21) is arranged that opens in direction of the first high-pressure chamber (10), wherein from the first high pressure chamber (10) at least a first return channel (22) extends, wherein an outflow cross section of said return channel can be closed by a control valve (13) in a first position and opened in a second position, wherein the control valve (13) comprises a control piston (15) which can be axially displaced in an accommodating bore (14) of the second rod part (4) of the connecting rod (1), which in particular can be displaced by a return spring (16) into the first position and by means of an actuating force against the force of the return spring (16) into the second position, wherein the piston element (7) is designed as a double-acting piston, preferably as a stepped piston, **characterized in that** the control piston (15) can be actuated electromagnetically and/or hydraulically by the oil pressure of the reciprocating-piston machine, wherein in on side of the piston element (7) facing the small connecting rod eye (2) between a holding part (33) fixedly connected with the second rod part (9) and the piston element (7) a second high-pressure chamber (11) is positioned, in which at least one second oil channel (30) leads, in which a second check valve (31) is arranged that opens in direction of the second high-pressure chamber (11).

2. Connecting rod (1) according to claim 1, **characterized in that** the first position of the control valve (13) is associated with an extended position (A) of the first rod part (6) and the second position of the control valve (13) with a retracted position (B) of the first rod part (6).

3. Connecting rod (1) according to claim 1 or 2, **characterized in that** the control piston (15) at a first, low oil pressure level of the reciprocating-piston machine takes the first position and at a second, higher oil pressure level of the reciprocating-piston machine the second position.

4. Connecting rod (1) according to claim 3, **characterized in that** the first rod part (6) can be hydraulically locked relative to the second rod part (9) both in the extended position (A) and also in the retracted position (B),

5. Connecting rod (1) according to one of claims 1 to 4, **characterized in that** at least one second return channel (32) extends from the second high-pressure chamber (11), wherein the outflow cross-section of said second return channel can be closed by the control valve (13) in the second position and can be opened in the first position.

6. Connecting rod (1) according to one of the preceding claims, **characterized in that** the first and second return channels (22, 32) only can be controlled by the control valve (13).

7. Connecting rod (1) according to one of claims 1 to 6, **characterized in that** at least one return flow throttle (29) is arranged in a feed line (25) to the control valve (13).

8. Connecting rod (1) according to one of claims 4 to 7, **characterized in that** the second oil channel (30) and/or the second return channel (32) is/are arranged outside a longitudinal center plane (ε) of the connecting rod (1), which encloses the longitudinal axis (1a) of the connecting rod (1).

9. Connecting rod (1) according to one of claims 1 to 8, **characterized in that** the holding part (33) is formed by a replaceable stop sleeve, which protrudes into the guiding cylinder (8), wherein preferably the stop sleeve is screwed together with the second rod part (9).

10. Connecting rod (1) according to one of claims 1 to 9, **characterized in that** the feed cross-section to the first oil channel (20) can be closed by the control valve (13) in the second position and can be opened in the first position.

11. Connecting rod (1) according to one of claims 1 to 10, **characterized in that** the feed cross-section to the second oil channel (30) can be closed by the control valve (13) in the first position and can be opened in the second position.

12. Connecting rod (1) according to one of claims 1 to 11, **characterized in that** the actuation of the control piston (15) is performed hydraulically by oil pressure or electromagnetically - against the force of the return spring (16).

13. Connecting rod (1) according to claim 12, **characterized in that** the control piston (15) consists of ferromagnetic material or comprises a permanent magnet element (42) which cooperates with an induction coil (41) arranged in the crankcase.

14. Connecting rod (1) according to claim 12 or 13, **characterized in that** the control piston (15) can be locked in at least one position by at least one locking element (43, 44), wherein preferably the locking element is formed by a spring-loaded part, wherein preferably the locking element (43, 44) has a spring-loaded pressure body which acts on the control piston (15) transversely to a movement direction thereof.

## Revendications

1. Bielle (1) à longueur réglable pour moteur à combustion interne à au moins une première partie de bielle (6) avec un petit oeil de bielle (2) et un deuxième bielle (9) avec un grand oeil de bielle (4),
les deux parties de bielle (6, 9) pouvant être déplacées entre elles et/ou l'un dans l'autre de manière télescopique et
la deuxième partie de bielle (9) formant un cylindre de guidage (8) et la première partie de bielle (6) forme un élément de piston (7) qui peut être déplacé longitudinalement dans le cylindre de guidage (8),
dans lequel se trouve sur le côté du grand oeil de bielle (4) de l'élemént de piston (7) un premier compartiment haute pression (10) entre le deuxième élément de bielle (9) et le piston (7),
dans lequel au moins un premier passage d'huile (20) s'ouvre, dans lequel, notamment un premier clapet anti-retour (21) qui ouvre dans le sens d' de la première chambre haute pression (10) est agencé,
dans lequel, de la première chambre à haute pression (10), au moins un premier canal de retour (22) émane,
dont la section transversale de sortie peut être fermée par une vanne de régulation (13) dans la première position et libérée dans une deuxième position,
dans lequel la vanne de commande (13) a dans un alésage de réception (14) de la deuxième partie de bielle (4) de la bielle (1) un piston d'actionnement (15), qui peut être déplacé axialement et qui en particulier peut être déplacé par un ressort de rappel (16) dans la première position et par une force d'actionnement à l'encontre de la force du ressort de rappel (16) dans la deuxième position,
l'élément de piston (7) étant conçu sous la forme d'un piston à double effet, de préférence sous la forme d'un piston à gradins,
**caractérisé en**
**ce que** le piston d'actionnement (15) peut être actionné électromagnétiquement et /ou hydrauliquement par la pression d'huile du moteur à combustion interne,
une deuxième chambre haute pression (11) étant formée sur le coté faisant face au petit oeil de bielle (2) entre une pièce de retenue (33) reliée de manière fixe à la deuxième partie de bielle (9) et l'élément de piston (7),
dans laquelle au moins un deuxième passage d'huile (30) s'ouvre,
dans lequel, dans le sens de la deuxième chambre à haute pression (11), s'ouvre un deuxième clapet anti-retour (31).

2. Bielle (1) selon la revendication 1, **caractérisé en ce que** la première position de la vanne de commande (13) est associée à une position étendue (A) de la première partie de bielle (6) et à la deuxième position de la vanne de commande (13) est associée à une position insérée (B) de la première partie de bielle (6).

3. Bielle (1) selon la revendication 1 ou 2, **caractérisé en ce que** le piston d'actionnement (15) occupe la première position dans un premier niveau de pression d'huile bas du moteur à combustion interne et la deuxième position dans un deuxième niveau de pression d'huile supérieur du moteur à combustion interne.

4. Bielle (1) selon la revendication 3, **caractérisé en ce que** la première partie de bielle (6) peut être verrouillée hydrauliquement par rapport à la deuxième partie de bielle (9), tant dans la position étendue (A) que dans la position insérée (B).

5. Bielle (1) selon l'une des revendications 1 à 4, **caractérisé en ce qu'**au moins un deuxième canal de retour (32) émane de la deuxième chambre haute pression (11), dont la section transversale de sortie peut être fermée par la vanne de commande (13) dans la deuxième position et peut être libérée dans la première position.

6. Bielle (1) selon l'une des revendications précédentes, **caractérisé en ce que** seuls les premiers et deuxièmes passages de retour (22, 32) peuvent être commandés par la vanne de commande (13).

7. Bielle (1) selon l'une des revendications 1 à 6, caractérisé en en ce qu'au moins un clapet anti-retour (29) est disposé dans une conduite d'alimentation (25) de la vanne de régulation (13).

8. Bielle (1) selon l'une des revendications 4 à 7, **caractérisé en ce que** le deuxième canal d'huile (30) et/ou le deuxième canal de retour (32) est disposé en dehors d'un plan médian longitudinal (ε) de la bielle (1) entourant l'axe longitudinal (1a) de la bielle (1).

9. Bielle (1) selon l'une des revendications 1 à 8, **caractérisé en ce que** la partie de maintien (33) est formée par une douille d'arrêt interchangeable faisant saillie dans le cylindre de guidage (8), la douille d'arrêt étant de préférence vissée sur la deuxième partie de bielle (9).

10. Bielle (1) selon l'une des revendications 1 à 9, **caractérisé en ce que** la section d'alimentation du premier canal d'huile (20) peut être fermée par la vanne de commande (13) dans la deuxième position et peut être libérée dans la première position.

11. Bielle (1) selon l'une des revendications 1 à 10, **caractérisé en ce que** la section d'alimentation du deuxième canal d'huile (30) peut être fermée par la vanne de commande (13) dans la première position et peut être libérée dans la deuxième position.

12. Bielle (1) selon l'une des revendications 1 à 11, caractérisé en en ce que l'actionnement du piston d'actionnement (15) est effectué hydrauliquement par pression d'huile ou électromagnétiquement - contre la force du ressort de rappel (16).

13. Bielle (1) selon la revendication 12, **caractérisé en ce que** le piston d'actionnement (15) se compose d'un matériau ferromagnétique ou comporte un élément magnétique permanent (42) qui interagit avec une bobine d'induction (41) disposée dans le carter.

14. Bielle (1) selon la revendication 12 ou 13, **caractérisé en ce que** le piston d'actionnement (15) peut être bloqué dans au moins une position par au moins un élément de blocage (43, 44), de préférence formé par une partie de pression à ressort, l'élément de blocage (43, 44) présentant de préférence un corps de pression à ressort qui agit sur le piston d'actionnement (15) transversalement au sens du mouvement de celui-ci.
